**Europäisches Patentamt**

**European Patent Office**

**Office européen des brevets**

(19)

(11) **EP 1 022 658 A1**

(12) **EUROPÄISCHE PATENTANMELDUNG**

(43) Veröffentlichungstag:
**26.07.2000 Patentblatt 2000/30**

(51) Int Cl.⁷: **G06F 9/46**

(21) Anmeldenummer: **99101122.2**

(22) Anmeldetag: **21.01.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Ross, Christopher Dr.**
 **81675 München (DE)**
• **Hanselka, Peter**
 **80335 München (DE)**
• **Raichle, Gabriele**
 **81476 München (DE)**

(54) **Lastverteilungsverfahren eines Multiprozessorsystems und Multiprozessorsystem**

(57)    Die Erfindung betrifft ein Verfahren zur Lastverteilung in einem Realzeit-Multiprozessorsystem und ein Multiprozessorsystem, wobei auf jedem Prozessor eine Verteilquote geführt wird, die den Anteil der verteilbaren Last, der tatsächlich verteilt werden soll, festsetzt. Die Verteilquote wird in Zeitintervallen neu bestimmt. Die einzige Information, die jedes Zeitintervall von den anderen Prozessoren benötigt wird, sind Lastwertindikatoren, die von einer geschätzten Last abhängen. Zusätzlich werden Wahrscheinlichkeiten geführt, welche angeben, wie bei Lastverteilung Last von einem auf die anderen Prozessoren übertragen wird. Anschließend verteilt jeder Prozessor anhand seiner Verteilquote und seiner Lastverteilungsfaktoren seine verteilbare Last an andere Prozessoren, wenn seine Verteilquote einen vorgegebenen Wert überschreitet.

Fig. 1

**Beschreibung**

Die Erfindung betrifft ein Verfahren zur Lastverteilung in einem Multiprozessorsystem, insbesondere in einem Multiprozessorsystem eines Kommunikationssystems, bei dem anfallende Aufgaben von mehreren Prozessoren $MP_i$ (mit i=1,2,....,n) unter Realzeitbedingungen abgearbeitet werden können und ein Multiprozessorsystem, insbesondere eines Kommunikationssystems, mit einem Lastverteilungsmechanismus.

Ein ähnliches Verfahren zur Lastverteilung in einem Multiprozessorsystem, insbesondere in einem Multiprozessorsystem eines Kommunikationssystems, ist beispielsweise aus der Europäischen Patentanmeldung EP 0 645 702 A1 der Anmelderin bekannt. Diese Schrift offenbart ein Verfahren zum Lastenausgleich in einem Multiprozessorsystem, insbesondere ein Multiprozessorsystem eines Kommunikationssystems, bei dem anfallende Aufgaben von mehreren Prozessoren unter Realzeitbedingungen abgearbeitet werden können, wobei zur Durchführung des Lastausgleiches allgemein die folgenden Verfahrensschritte genannt sind:

- jeder Prozessor ermittelt seinen Lastzustand in Form einer quantifizierten Größe,
- jedem Prozessor werden die Lastzustände der anderen Prozessoren innerhalb eines Zeitrasters mitgeteilt,
- jeder Prozessor gibt in Abhängigkeit vom Überschreiten einer bestimmten Größe seines Lastzustandes und in Abhängigkeit von den Lastzuständen der übrigen Prozessoren zumindest einen Teil der bei ihm anfallenden Aufgaben an die übrigen Prozessoren ab, und
- die abgegebenen Aufgaben werden entsprechend den Lastzuständen der übrigen Prozessoren auf diese aufgeteilt.

Im Ausführungsbeispiel wird das Verfahren dahingehend konkretisiert, daß im Betrieb ständig und vor dem Einstieg in die Lastverteilung, die hier erst ab dem Erreichen einer bestimmten Überlast beginnt, Verteilungsquoten errechnet werden, nach denen die einzelnen Prozessoren im Fall der Überlast an andere Prozessoren ihre verteilbare Last abgeben.

Ist das System dauerhaft ungleichmäßig ausgelastet, so wird die Last erst bei Überlast eines oder mehrerer Prozessoren verteilt. Damit geht aber unnötige Lastabwehr einher. Die Reduktion der Überlastschwelle auf einen niedrigeren Wert führt zu keinem befriedigenden Ergebnis, weil dann unnötig viel Last verteilt wird und es zu Schwingungszuständen kommen kann. Diese Situation ergibt sich aus der dort getroffenen Annahme, daß die Überlast oder die ungleichmäßige Belastung von kurzer Dauer ist.

Es ist daher Aufgabe der Erfindung, ein verbessertes Lastverteilungsverfahren für ein Multiprozessorsystem anzugeben, welches rechtzeitig und "weich" einsetzt und dadurch dauerhafte Schieflastzustände im Lastangebot ohne Lastabwehr bewältigt. Außerdem soll auch ein entsprechendes Multiprozessorsystem angegeben werden.

Die Aufgabe wird einerseits durch ein Verfahren mit den Verfahrensschritten des ersten Verfahrensanspruches und andererseits durch ein Multiprozessorsystem mit den Merkmalen des ersten Vorrichtungsanspruches gelöst.

Demgemäß schlagen die Erfinder ein Verfahren zur Lastverteilung in einem Multiprozessorsystem, insbesondere in einem Multiprozessorsystem eines Kommunikationssystems, bei dem anfallende Aufgaben von mehreren Prozessoren $MP_i$ (mit i=1,2,....,n) unter Realzeitbedingungen abgearbeitet werden können, mit folgenden iterativen und sich in Zeitintervallen CI wiederholenden Verfahrensschritten vor:

- jeder Prozessor $MP_i$ ermittelt seinen tatsächlichen Lastzustand $Y_i$ - bestimmt gegebenenfalls direkt hieraus einen mehrwertigen Laststatus (load state) $MPls_i$ - und schätzt in Abhängigkeit von zuvor mitgeteilten Verteilungsquoten $q_i$(alt) (mit $q_i$=an andere Prozessoren $MP_k$ nach Möglichkeit zu verteilender Lastanteil) und dem typischerweise verteilbaren Anteil V einer typischen Aufgabe seine angebotene Last $A_i$, die zu einem mehrwertigen Lastindikationswert (Balancing Indicator) $MPbi_i$ führt,
- jeder Prozessor $MP_i$ teilt seinen Lastindikationswert $MPbi_i$ den jeweils anderen Prozessoren $MP_k$ (mit k=1,2,...i-1,i+1,...n) mittelbar oder unmittelbar mit,
- jeder Prozessor $MP_i$ bestimmt seine Lastverteilungsfaktoren $p_{ij}$ (mit j=1,2,....n) in Abhängigkeit von den Lastindikationswerten $MPbi_k$ dieser anderen Prozessoren $MP_k$,
- jeder Prozessor $MP_i$ bestimmt seine Verteilungsquote $q_i$(neu) in Abhängigkeit von seinem tatsächlichen Lastzustand $Y_i$ und den Lastverteilungsfaktoren $p_{ij}$
- jeder Prozessor $MP_i$ verteilt anhand seiner Quote $q_i$ und seiner Lastverteilungsfaktoren $p_{ij}$ seine verteilbare Last an andere Prozessoren $MP_k$, wenn seine Verteilungsquote $q_i$(neu) einen vorgegebenen Wert $q_v$ überschreitet.

Zur Abschätzung der angebotenen Last $A_i$ eines Prozessors $MP_i$ ist es vorteilhaft, die Formel $A_i:=Y_i/(1-q_iV)$ zu verwenden.

Vorteilhaft ist auch eine Unterteilung des mehrwertigen Lastindikationswertes (balancing indicator) $MPbi_i$ in drei diskrete Werte, wobei vorzugsweise die folgende Abgrenzung mit Schwellenwerten gilt: NORMAL für $MPbi_i$, wenn

die Prozessorauslastung 0 bis 70% beträgt, HIGH für $MPbi_i$, wenn die Prozessorauslastung 70% bis 85% beträgt, und OVERLOAD für $MPbi_i$, wenn die Prozessorauslastung über 85% beträgt.

Vorteilhaft ist es auch, wenn eine Hysterese bei Lastzustandswechsel aufgrund von Schwellenwertüberschreitung oder Schwellenwertunterschreitung bei steigender oder fallender Prozessorauslastung eingeführt wird.

Außerdem kann es vorteilhaft sein, wenn der Lastindikationswert (balancing indicator) MPbii bezüglich Änderungen einer zeitlichen Hysterese unterliegt und damit eine gewisse Trägheit erfährt. Als Hysteresegrenze können vorteilhaft Werte von 1 bis 2 Zeitintervallen CI angenommen werden.

Bezüglich des mehrwertigen Laststatus (load state) $MPls_i$ wird als besonders bevorzugt die Annahme von vier diskreten Werten vorgeschlagen, wobei vorzugsweise angenommen wird: NORMAL für $MPls_i$, wenn die Prozessorauslastung unter 70% liegt, HIGH für $MPls_i$, wenn die Prozessorauslastung 70% bis 85%, OVERLOAD für $MPls_i$, wenn die Prozessorauslastung über 85% liegt und EXTREME für $MPls_i$, wenn dauerhaft der Lastzustand OVERLOAD vorherrscht. Auch hier kann es vorteilhaft sein, wenn der Laststatus (load state) $MPls_i$ bezüglich Änderungen einer Hysterese unterliegt. Als Hysteresegrenze können vorteilhaft Werte von 1 bis 2 Zeitintervallen CI angenommen werden.

Weitere vorteilhafte Annahmen bei der Durchführung des erfindungsgemäßen Verfahrens sind: der typische verteilbare Anteil V einer typischen Aufgabe soll der durchschnittliche oder maximale Anteil sein und als typische Bearbeitungszeit einer Aufgabe soll eine durchschnittliche oder maximale Bearbeitungszeit einer Aufgabe angenommen werden. Vorteilhaft kann hierbei der jeweilige Durchschnittswert oder Maximalwert eines Anteils beziehungsweise einer Aufgabe auch während der Betriebszeit ständig ermittelt und gegebenenfalls als gleitender Wert mitgeführt und aktualisiert in das Lastverteilungsverfahren übernommen werden. Günstig ist es hierbei, wenn die Zeitdauer, über die die gleitenden Werte ermittelt werden, groß gegenüber dem Kontrollintervall CI ist.

Besonders vorteilhaft ist es auch, wenn für den vorgegebenen Wert $q_V$ der Verteilungsquote $q_i$, ab dem der Prozessor MPi verteilbare Last an andere Prozessoren $MP_k$ verteilt, gilt: $0,05 < q_V < 0,3$, vorzugsweise $0,1 < q_V < 0,25$, vorzugsweise $q_V = 0,2$.

Weiterhin kann das erfindungsgemäße Verfahren besonders vorteilhaft ausgestaltet werden, wenn bei der Berechnung der Verteilungsquote $q_i$ die folgenden Kriterien erfüllt werden:

- $P_{ii} := 0$
- falls $MPbi_j$ einer mittlere Last entspricht, vorzugsweise $MPbi_j = NORMAL$, gilt: $p_{ij}(neu) = pij(alt) + p_{c1}/n$, für $j = 1,...,n$ und $i \neq j$
- falls $MPbi_j$ einer hohen Last entspricht, vorzugsweise $MPbi_j = HIGH$ gilt: $p_{ij}(neu) = pij(alt) - p_{c2}/n$, für $j = 1,...,n$ und $i \neq j$
- falls $MPbi_j$ einer Überlast entspricht, vorzugsweise $MPbi_j = OVERLOAD$, gilt: $p_{ij}(neu) = 0$
- wobei vorzugsweise die $p_{ij\ (j=1,..,n)}$ mit der Summe $p_{sum}$ der $p_{ij}$ auf 1 normiert wird und
- als Initialisierungswert beim Beginn der Verteilungsprozesse alle $p_{ij}$, ausgenommen $p_{ii}$, gleich sind.

Als vorteilhafte Zahlenwerte können für die Konstante $p_{c1}$ $0,1 < p_{c1} < 0,5$, vorzugsweise $0,2 < p_{c1} < 0,3$ und vorzugsweise $p_{c1} = 0,25$ angenommen werden. Ebenso ist es vorteilhaft für die Konstante $p_{c2}$ $0,1 < p_{c2} < 0,5$, vorzugsweise $0,2 < p_{c2} < 0,3$, vorzugsweise $p_{c2} = 0,25$ zu setzen. Auch kann der Initialisierungswert der $p_{ij}$ beim Beginn der Verteilungsprozesse gleich $(n-1)^{-1}$ gesetzt werden.

Weiterhin kann das erfindungsgemäße Verfahren besonders vorteilhaft ausgestaltet werden, wenn bei der Berechnung der Lastindikationswerte $MPbi_i$ die folgenden Kriterien erfüllt werden:

- falls $MPls_i$ der höchsten Last entspricht, vorzugsweise $MPls_i = EXTREME$, gilt: $q_i(neu) = q_{c1}$,
- falls $p_{sum} \geq 1$ gilt:
- falls der tatsächliche Lastzustand $Y_i$ größer als ein vorgegebener Wert $threshold_H$ ist, wird $q_i$ vergrößert mit $q_i = min\{q_i + c_{q1}, 1\}$,
- falls der tatsächliche Lastzustand $Y_i$ kleiner als ein vorgegebene Wert $threshold_N$ ist, wird $q_i$ verkleinert mit $q_i = max\{q_i - C_{q2}, c_{q3}\}$, mit $0 < c_{q3} < q_v$, vorzugsweise $c_{q3} = 0,1$,
- andernfalls ($threshold_N \leq Y_i \leq threshold_H$) erhält qi einen Zwischenwert zwischen den beiden oben genannten Alternativen, vorzugsweise durch lineare Interpolation
- falls $p_{sum} \leq 1$ gilt: $qi(neu) = qi(alt) * p_{sum}$.

Zur optimalen Ausgestaltung des Verfahrens sind für die Konstante cqi die folgenden Zahlenbereiche und -werte bevorzugt: $0,05 < c_{q1} < 0,3$, vorzugsweise $0,1 < c_{q1} < 0,2$, vorzugsweise $c_{q1} = 0,15$. Außerdem kann für die Konstante $c_{q2}$ vorzugsweise $0,05 < c_{q2} < 0,2$, vorzugsweise $c_{q2} = 0,10$ angenommen werden.

Bezüglich der Konstanten $threshold_N$ gilt als bevorzugter Wertebereich: $0,6 < threshold_N < 0,8$, vorzugsweise $threshold_N = 0,7$.

Bezüglich der Konstanten $threshold_H$ gilt als bevorzugter Wertebereich: $0,7 < threshold_H < 0,95$, vorzugsweise $threshold_H = 0,85$.

Eine andere Ausgestaltung des erfindungsgemäßen Verfahrens sieht vor, daß zusätzlich in jedem Zeitintervall CI ein Überlastwert $OL_i$ der Prozessoren $MP_i$ ermittelt wird, der ein Maß für die Größe der Überlast ist und als Maßstab zur Überlastabwehr dient, mit $OL_i=0,1,...m$ , und die Verteilungsquote $q_i$ auf jeden Fall vergrößert wird, falls $OL_i>0$ mit $q_i(neu) :=min\{qi(alt)+ c_{q1},1\}.$

Erfindungsgemäß besteht auch die Möglichkeit, eine Adaption des Lastverteilungsverfahrens an sich ändernde Randbedingungen durchzuführen, indem die oben angegebenen Konstanten ($q_v$, $p_{c1}$, $P_{c2}$, $q_{c1}$, $q_{c2}$, $threshold_N$, $threshold_N$, $c_{q1}$, $c_{q2}$, $C_{q3}$) im Betrieb zumindest teilweise angepaßt werden.

Erfindungsgemäß wird außerdem ein Multiprozessorsystem, insbesondere eines Kommunikationssystems, mit mehreren Prozessoren $MP_i$ (mit i=1,2,....,n) zur Ausführung anfallender Aufgaben unter Realzeitbedingungen, vorgeschlagen, wobei:

- jeder Prozessor $MP_i$ Mittel aufweist, um seinen tatsächlichen Lastzustand $Y_i$ zu bestimmen, - gegebenenfalls direkt hieraus einen mehrwertigen Laststatus (load state) $MPls_i$ zu bestimmen - und in Abhängigkeit von zuvor mitgeteilten Verteilungsquoten $q_i(alt)$ (mit $q_i$=an andere Prozessoren $MP_k$ nach Möglichkeit zu verteilender Lastanteil) und dem typischerweise verteilbaren Anteil V einer typischen Aufgabe seine angebotene Last $A_i$ zu schätzen, die zu einem mehrwertigen Lastindikationswert (Balancing Indicator) $MPbi_i$ führt,
- jeder Prozessor $MP_i$ Mittel aufweist, um seinen Lastindikationswert $MPbi_i$ den jeweils anderen Prozessoren $MP_k$ (mit k=1,2,...i-1,i+1,...n) mittelbar oder unmittelbar mitzuteilen,
- jeder Prozessor $MP_i$ Mittel aufweist, um seine Lastverteilungswahrscheinlichkeiten $p_{ij}$ (mit j=1,2,....n) in Abhängigkeit von den Lastindikationswerten $MPbi_k$ dieser anderen Prozessoren $MP_k$ zu bestimmen,
- jeder Prozessor $MP_i$ Mittel aufweist, um seine Verteilquote $q_i(neu)$ in Abhängigkeit von seinem tatsächlichen Lastzustand $Y_i$ zu bestimmen, und
- jeder Prozessor $MP_i$ Mittel aufweist, um anhand seiner Quote $q_i$ und seiner Lastverteilungsfaktoren $p_{ij}$ seine verteilbare Last an andere Prozessoren $MP_k$ zu verteilen, wenn seine Verteilquote $q_i(neu)$ einen vorgegebenen Wert $q_v$ überschreitet.

Erfindungsgemäß kann das oben vorgeschlagene Multiprozessorsystem so ausgestaltet werden, daß jeweils eines der oben genannten Verfahren implementiert ist, wobei die Implementierung durch eine entsprechende Programmierung der Prozessoren erfolgt.

Es ist noch darauf hinzuweisen, daß der Index (alt) sich jeweils auf die Werte des vorhergehenden Iterationsschrittes, beziehungsweise der Index (neu) sich auf den jetzt aktuellen Iterationsschritt beziehen.

Der besondere Vorteil des erfindungsgemäßen Verfahrens und des entsprechenden Multiprozessorsystems liegt darin, daß es im Gegensatz zum eingangs genannten Stand der Technik einen "weichen" Einstieg in die Lastverteilung gewährleistet und dadurch anpassungsfähiger, weniger anfällig gegen Schieflastsituationen ist und Schwingungszustände besser vermieden werden. Im Endeffekt wird hierdurch die Wahrscheinlichkeit für die Abwehr von Aufgaben, insbesondere Vermittlungsaufgaben reduziert.

Weitere Ausgestaltungen, zusätzliche Merkmale und Vorteile der Erfindung ergeben sich aus der nachfolgenden Beschreibung eines bevorzugten Ausführungsbeispiels unter Bezugnahme auf die Zeichnungen.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Die Figuren zeigen im einzelnen:

Figur 1:    Flußbild des anfallenden und verteilten Lastangebotes
Figur 2a:    Grafische Darstellung der Entscheidungen zur Aktualisierung der Lastverteilungsfaktoren $p_{ij}$
Figur 2b:    Grafische Darstellung der Entscheidungen zur Aktualisierung der Verteilungsquoten $q_i$
Figur 3:    Formel zur linearen Interpolation von $q_i$

Das erfindungsgemäße Verfahren (Normal Load Balancing=NLB) ist ein quotiertes Load Balancing Verfahren, das auf einem Multiprozessorsystem, insbesondere in einer Vermittlungsstelle eines Kommunikationssystems, zur Verteilung anfallender Arbeitslasten auf die jeweils anderen Prozessoren abläuft und sicherstellen soll, daß andauernde Schieflastsituationen bewältigt und möglichst alle angeforderten Aufgaben in möglichst kurzer Zeit abgearbeitet werden. Nachfolgend soll eine besonders vorteilhafte Ausführungsform dieses Verfahrens beschrieben werden.

Auf jedem Prozessor $MP_i$ mit i=1,2,...,n wird eine Verteilquote $q_i$ geführt, die den Anteil V der verteilbaren Last, der tatsächlich verteilt werden soll, festsetzt. Eine solche Quote ermöglicht einen weicheren Ein- beziehungsweise Ausstieg aus der Lastverteilung an andere Prozessoren. Auf diese Weise werden Schwingzustände und Lastschwankungen vermieden. Dies kann beispielsweise der Fall sein, wenn ein Prozessor so viel Last an einen anderen verteilt, daß dieser wiederum überlastet wird.

Die Verteilquote $q_i$ wird jedes Zeitintervall CI neu bestimmt. Die einzige Information, die jedes CI von den anderen Prozessoren $MP_k$ mit k=1,...i-1,i+1,...n benötigt wird, sind Lastwertindikatoren (Balancing Indikatoren) $MPbi_i$. Diese Lastwertindikatoren sind - ähnlich wie die Laststatuswerte (Load States) von der Load Control - Lastzustände mit den Wertigkeiten NORMAL, HIGH oder OVERLOAD. Während der Load State anhand der tatsächlich bearbeiteten Last $Y_i$ des Prozessors $MP_i$ bestimmt wird, wird der Lastwertindikatoren $MPbi_i$ aus einer Schätzung der aktuell angebotenen Last $A_i$ ermittelt. Die geschätzte angebotene Last $A_i$ kann durch Lastverteilung erheblich mehr als die tatsächlich bearbeitete Last $Y_i$ sein und stellt die maßgebliche Größe dar, die (in Form des Lastwertindikators $MPbi_i$) ein Prozessor $MP_i$ den anderen $MP_k$ als Information zur Verfügung stellt.

Zusätzlich zur Verteilungsquote $q_i$ werden auf jedem $MP_i$ Wahrscheinlichkeiten $p_{ij}$ geführt, welche die Wahrscheinlichkeit angeben, daß bei Lastverteilung Last vom i-ten Prozessor $MP_i$ auf den j-ten Prozessor $MP_j$ übertragen wird. Die Wahrscheinlichkeiten werden so bestimmt, daß, wenn etwa der j-te Prozessor $MP_j$ schon viel Last zu bearbeiten hat und deshalb nur wenig zusätzliche Last aufnehmen kann, das zugehörige $p_{ij}$ kleiner ist als das $P_{ik}$ für einen freien $MP_k$.

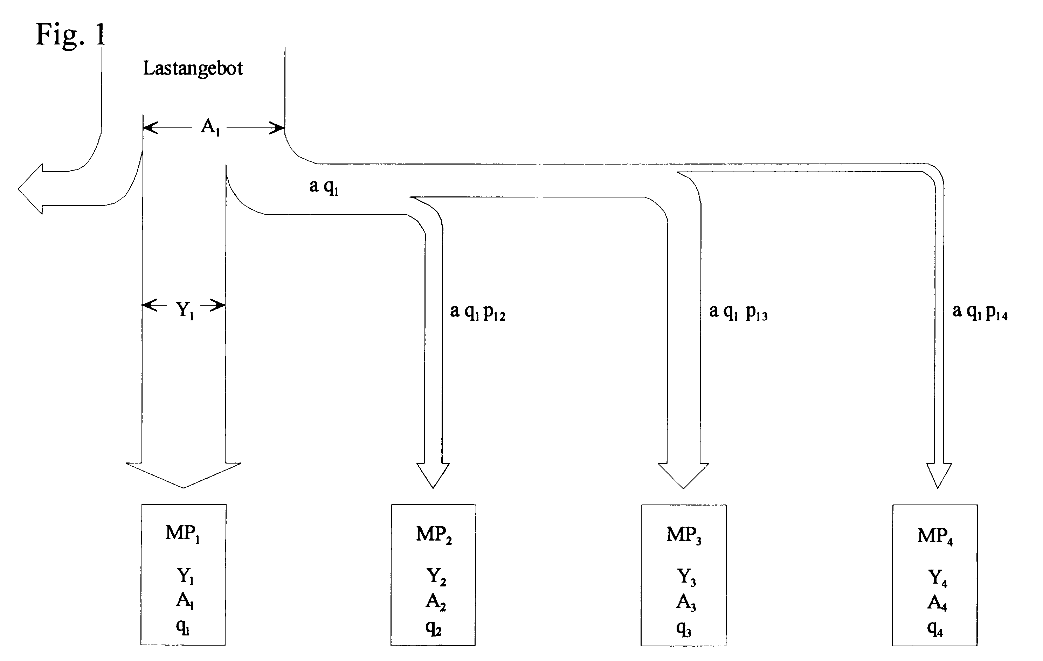

In Figur 1 wird das Zusammenspiel der $p_{ij}$ und $q_i$ veranschaulicht. Die doppelte Indizierung "ij" der Kenngrößen besagt, daß jeweils der Prozessor mit der Nummer des ersten Index (hier i) jeweils eine "Spalte" von n Werten mit dem zweiten Index (hier j) kennt. Es ist zu bemerken, daß jeder Prozessor nur seine relevanten Werte (also seine Spalte) kennt, wobei insgesamt im System eine quadratische Matrix bekannt ist So ist zum Beispiel $p_{ij}$ die Wahrscheinlichkeit, daß Last vom i-ten MP auf den j-ten MP verteilt wird, wenn der i-te MP zu viel Last hat.

In der Figur 1 ist außerdem die tatsächlich bearbeitete Last des j-ten Prozessors $MP_j$ mit $Y_j$, die geschätzte angebotene Last mit $A_j$ und der Teil des Lastangebotes, der verlagert werden kann, mit a bezeichnet. Die gezeigte Lastsituation ist Überlast (OVERLOAD) auf $MP_1$, auf den $MP_k$ mit k=2,3,4 ist noch Raum für zusätzliche Aufgaben. Es wird gezeigt, wie der $MP_1$ einen ersten Teil der Last selbst bearbeitet und den Rest a verteilt. Von diesem Rest a geht der größte Anteil an $MP_3$, der kleinste Anteil an $MP_4$, der in diesem Beispiel also schon viel eigene Last zu bearbeiten hat. Nicht eingezeichnet sind die Lasten, welche die $MP_k$ außer von $MP_1$ noch erhalten. Die Breite der Fließbalken stellen ein Maß für die Größe der Last dar.

Gemäß dem Erfindungsgedanken ergibt sich also der folgende Algorithmus: Meldet der j-te Prozessor $MP_j$ den Balancing Indikator NORMAL, wird auf dem jeweils betrachteten $MP_i$ das $p_{ij}$ vergrößert. Es steigt also die Wahrscheinlichkeit, daß dieser Prozessor $MP_i$ Last an $MP_j$ abgibt, wenn er Last verteilen muß. Wird der Balancing Indikator HIGH gemeldet, so wird das $p_{ij}$ verkleinert. Wird der Balancing Indikator OVERLOAD gemeldet, wird $p_{ij}$ auf Null gesetzt, so daß keine Last an den j-ten Prozessor $MP_j$ abgegeben wird. Die Verteilungsquote $q_i$ wird anschließend an die Bestimmung der $p_{ij}$ verändert. Konnten viele der $p_{ij}$ vergrößert werden, so ist die Summe der $p_{ij}$ über j größer 1 und offenbar noch Platz auf den anderen Prozessoren $MP_k$. Die Verteilungsquote $q_i$ kann also nach den Erfordernissen des (betrachteten) Prozessors verändert werden.

Bei hoher Last $Y_i$ auf dem betrachteten Prozessor $MP_i$ wird die Verteilungsquote $q_i$ vergrößert, bei niedriger Last wird $q_i$ verkleinert. Sind viele der $p_{ij}$ verringert worden, dann ist die Summe der $p_{ij}$ über j kleiner 1 und die Verteilungsquote $q_i$ muß verringert werden.

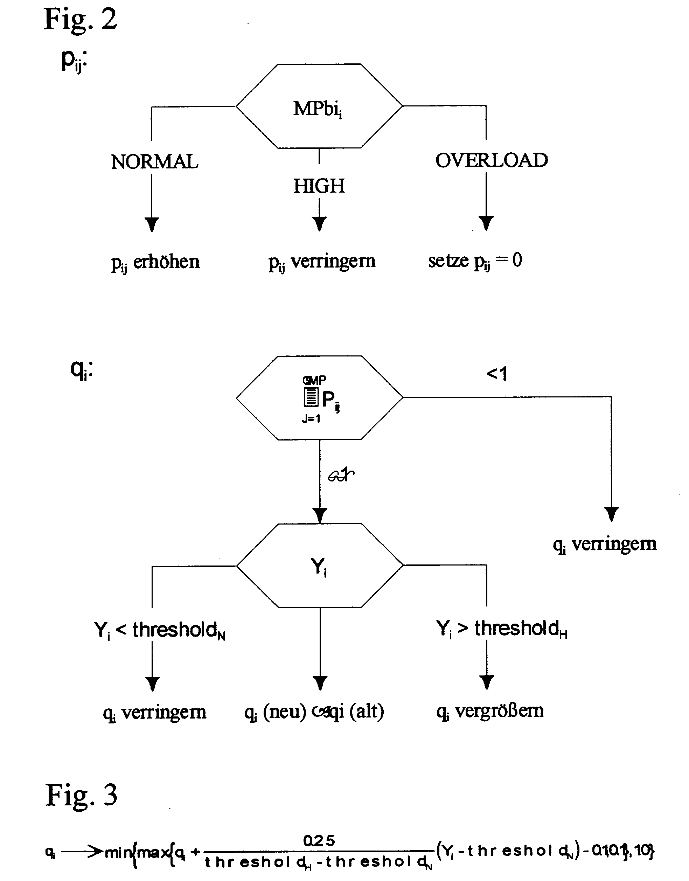

Eine Veranschaulichung dieser Entscheidungen ist in den Figuren 2a und 2b dargestellt. Die Entscheidungsdiagramme zeigen die Aktualisierungsalgorithmen für $p_{ij}$ (Figur 2a) und für Verteilungsquote $q_i$ (Figur 2b), die jedes Zeitintervall CI für den i-ten Prozessor $MP_i$ durchgeführt werden.

Bei dem erfindungsgemäßen Lastverteilungsverfahren (NLB) werden einige Parameter (Konstanten) benötigt, deren Wahl das Verhalten in bestimmten Lastsituationen stark beeinflussen kann. Es ergibt sich in den meisten Fällen ein Konflikt zwischen einem Lastverteilungsverfahren, das schnell auf Laständerungen reagieren kann, und einem stabilen Lastverteilungsverfahren, das nicht zu Schwingungen und zum Weiterverteilen von Aufgaben neigt. "Weiterverteilen" bedeutet hier das gleichzeitige Verteilen von eigener Last und das Bearbeiten von fremder Last auf einem Prozessor.

Folgende Parameterveränderungen bewirken ein schneller reagierendes NLB:

- Das stärkere Verändern von $q_i$ mit: $0{,}15<c_{q1}$, $0{,}1<c_{q2}$
- Das stärkere Verändern der $p_{ij}$ mit: $0{,}25<p_{c1}$, $0{,}25<p_{c2}$
- Das spätere Setzen der Lastindikationswerte $MPbi_i$ mit: $threshold_H>0{,}7$ (d.h. erst bei höherer Last 'HIGH' an die anderen Prozesssoren MPk melden)

Detailliert verläuft das bevorzugte Verfahren bei einem Multiprozessor-Kommunikationsrechner also wie folgt:

Als Dauer des Zeitintervalls (Kontrollintervall) CI des Zeitrasters, mit dem das Verfahren iterativ abläuft, wird bei den derzeit bekannten Multiprozessorsystemen der Vermittlungstechnik bevorzugt 1 bis 2 Sekunden gewählt. Es ist selbstverständlich, daß mit steigender Prozessorleistung das Zeitintervall gekürzt werden kann.

Jedes Kontrollintervall CI werden die Größen $q_i$, $p_{ij}$, $MPls_i$ und $MPb_{ij}$ aktualisiert.

Die tatsächlich bearbeitete Last $Y_i$ eines Prozessors $MP_i$ wird als Prozessorlaufzeitgröße, gemessen in Erlang, ermittelt.

Die geschätzte angebotene Last $A_j$ eines Prozessors $MP_i$ wird aus der Verteilquote $q_i$ des aktuellen Kontrollintervalls CI und dem geschätzten verteilbaren Anteil einer durchschnittlichen Aufgabe, zum Beispiel der Abarbeitung eines Calls, ermittelt.

Es gilt:
Die Anzahl der Prozessoren $MP_i$ im Multiprozessorsystem ist n.

$$A_i := Y_i/(1-q_iV), \text{ wobei V der verteilbare Anteil eines Calls ist.}$$

$MPls_i$: Load State des i-ten MPs, kann die Werte NORMAL, HIGH, OVERLOAD oder EXTREME annehmen. Zur Berechnung des Load States wird die tatsächlich bearbeitete Last Yi herangezogen.

Zur Vermeidung von vorschnellen Änderungen des $MPls_i$ werden Hysteresen eingeführt. Wird etwa der $MPls_i$ von NORMAL auf HIGH gesetzt, muß $Y_i > threshold_N + \Delta_+$ sein, wohingegen, um von HIGH nach NORMAL zu kommen, $Y_i < threshold_N - \Delta_-$ sein muß. Diese Vorgehensweise ist auch als High Water-Low Water Methode bekannt. Bei EXTREME muß aus systemtechnischen Gründen der Vermittlungsstelle das Verteilungsverfahren (Load Balancing) für diesen Prozessor $MP_i$ abgeschaltet werden.

$threshold_N$: Ist die Normallastschwelle - nach Berücksichtigung einer Hysterese wird unterhalb dieser der MPls als NORMAL geführt, oberhalb als HIGH.

$threshold_H$: Hochlastschwelle - nach Berücksichtigung einer Hysterese und einer lastabhängigen zeitlichen Verzögerung (Startindikator) wird unterhalb dieser Schwelle der MPls als HIGH geführt, oberhalb als OVERLOAD.

Der Lastindikationswert (Balancing Indikator) $MPbi_i$ des i-ten Prozessors $MP_i$ kann die Werte NORMAL, HIGH oder OVERLOAD annehmen. Dieser wird wie der $MPls_i$ berechnet, nur wird hier anstelle der tatsächlichen Last $Y_i$ die geschätzte angebotene Last $A_i$ zugrundegelegt und andere Werte für $\Delta_+$ und $\Delta_-$ genommen, mit $\Delta_+ = \Delta_- = 0.02$.

Zusätzlich wird ein Overload Level $OL_i$ des Prozessors $MP_i$ bestimmt, der die Werte 0... 6 annehmen kann und als Quantifizierung des Überlastzustandes des Prozessors $MP_i$ gedacht ist. Ist der $OL_i > 0$, werden Calls abgewehrt, je höher der Wert, desto wahrscheinlicher wird ein Call abgewiesen.

Die Last, die von $MP_i$ nach $MP_j$ verteilt werden soll, wird als Wahrscheinlichkeit $p_{ij}$ ausgedrückt und kann somit Werte zwischen 0 und 1 annehmen.

Die Größe des Wertes $p_{ij}$ bestimmt sich durch folgende Kriterien:

- Initialisiere $p_{ij}$ mit $p_{ij} := (n-1)^{-1}$
- $p_{ii} := 0$, $MP_i$ soll nicht an sich selbst verteilen.
- Falls $MPbi_j = NORMAL$: $p_{ij} \longrightarrow p_{ij} + 0.25/n$, $j=1,...,n$, $i \neq j$. Das alte $p_{ij}$ kann vergrößert werden, weil auf dem Prozessor $MP_j$ noch Platz ist.
- Falls $MPbi_j = HIGH$: $p_{ij} \longrightarrow p_{ij} - 0.25/n$. Das alte $p_{ij}$ muß verkleinert werden, weil $MP_j$ voll ausgelastet ist.
- Falls $MPbi_j = OVERLOAD$: $p_{ij} = 0$. Es soll keine Last an überlastete Prozessoren $MP_n$ abgeben werden.

Die neu bestimmten $p_{ij}$ müssen noch normiert werden:

$$\text{Setze } p_{sum} = summe(p_{ij}) \text{ über } j=1,..,n$$

$$\text{und normiere (falls } p_{sum} > 0) \text{ mit } p_{ij} \longrightarrow p_{ij}/p_{sum}$$

Anschließend wird die Verteilungsquote $q_i$ mit den folgenden Kriterien bestimmt:

- Initialisierungswert: $q_i = 0.1$
- Falls der $MPls_i = EXTREME$: $q_i = 0.1$. Dieser MP ist so stark überlastet, daß ihn auch der Eigenanteil für einen verteilten Call überfordern würde. Deshalb kein Load Balancing, sondern nur Abwehr; das Load Balancing ist zudem aus systemtechnischen Gründen der Vermittlungsstelle nicht sinnvoll.
- Falls $p_{sum} > 1$, kann offenbar mehr Last verteilt werden. Dann kann $q_i$ nach den Erfordernissen des $MP_i$ bestimmt werden, mit:

  1. Falls der $OL_i > 0$, $q_i$ auf jeden Fall vergrößern mit: $q_i \longrightarrow \min\{q_i + 0.15, 1\}$
  2. Falls $Y_i > threshold_H$, $q_i$ vergrößern mit: $q_i \longrightarrow \min\{qi + 0.15, 1\}$

3. Falls $Y_i <$ threshold$_N$, $q_i$ verkleinern mit: $q_i \rightarrow$ max $\{q_i - 0.10, 0.1\}$.

4. Andernfalls, falls threshold$_N < Y_i <$ threshold$_H$ gilt:

$$q_i \rightarrow \min\{\max\{q_i + (0.25/(\text{threshold}_H - \text{threshold}_N))*(Y_i - \text{threshold}_N) - 0.1, \ 0.1\}, 1.0\}$$

Dies ist die lineare Interpolation zwischen der obigen Vergrößerung um 0.15 und der obigen Verkleinerung um 0.1. Die Formel ist nochmals in besser lesbarer Weise in der Figur 3 dargestellt.

- Falls $p_{sum} < 1$, wurde offenbar zuviel Last verteilt und $q_i$ muß verkleinert werden mit: $q_i \rightarrow q_i * p_{sum}$.

- Der Prozessor MP$_i$ verteilt Last an andere Prozessoren MP$_k$, wenn $q_i > 0.25$ wird.

Das erfindungsgemäße Verfahren weist somit die folgenden Eigenschaften und Vorteile auf:

Ein sehr geringer Informationsoverhead zwischen den am Lastverteilungsverfahren beteiligten Prozessoren. Gegenseitig bekannt sind nur wenige, vorzugsweise dreiwertige Lastzustände, die nur einmal pro Kontrollintervall aktualisiert und verteilt werden.

Für jeden Prozessor gibt es eine Quote, die jedes Kontrollintervall aktualisiert wird und die den Anteil der Last regelt, die vom betrachteten Prozessor an die anderen beteiligten Prozessoren verteilt werden soll.

Für jeden Prozessor gibt es Einzelregulatoren, welche die zu verteilende Last auf die anderen Prozessoren aufteilen.

Das Verfahren ist nicht nur als "Feuerwehrmaßnahme" konzipiert, das erst wirksam wird, wenn ein Prozessor in Überlast gerät und gegebenenfalls Aufgaben (Calls) abgewehrt werden, sondern es setzt die Lastverteilung früher und weicher ein. Dadurch können Dauerschieflastzustände besser und mit weniger abgewiesenen Aufgaben (Calls) verarbeitet werden.

Im erfindungsgemäßen Verfahren werden die Lastzustände, die an die anderen Prozessoren verteilt werden, konsequent anhand der geschätzten angebotenen Last und nicht anhand der tatsächlich bearbeiteten Last ermittelt.

Das Verfahren benötigt kein Load Balancing Flag, das den Einstieg in die Lastverteilung regelt. Der Einstieg wird über die Verteilquote $q_i$ geregelt. Weiterhin sind durch das Fehlen eines Load Balancing Flags gegenseitige Abhängigkeiten zwischen den Lastzuständen und dem Load Balancing Flag eliminiert worden. Dadurch ist eine nachträgliche Anpassung des Algorithmus an veränderte Bedingungen leichter möglich.

Die lastabhängige Veränderung der Einzelregulatoren (Lastverteilungsfaktoren $p_{ij}$) geschieht in Abhängigkeit von der Anzahl n der an der Lastverteilung beteiligten Prozessoren. Somit ist das Verfahren unabhängig von der Anzahl der beteiligten Prozessoren.

Die lastabhängige Veränderung der Verteilungsquoten und der Einzelregulatoren pro Kontrollintervall geschieht so, daß ein zu langsames "Heranschleichen" an den optimalen Wert vermieden wird.

Die lastabhängige Veränderung der Einzelregulatoren vermeidet ein Verharren der Werte auf die Einstellung der vorangegangenen Lastverteilungsperiode während einer Periode ohne Lastverteilung. Es wird vielmehr auf eine Ausgangsstellung zurückgeregelt.

Die aus dem Stand der Technik bekannte Trägheit in der Veränderung der Quoten wurde entfernt, um ein leichteres Nachführen an die tatsächlich vorliegende Lastsituation zu ermöglichen.

## Patentansprüche

1. Verfahren zur Lastverteilung in einem Multiprozessorsystem, insbesondere in einem Multiprozessorsystem eines Kommunikationssystems, bei dem anfallende Aufgaben von mehreren Prozessoren MP$_i$ (mit i=1,2,....,n) unter Realzeitbedingungen abgearbeitet werden können, mit folgenden iterativen und sich in Zeitintervallen CI wiederholenden Verfahrensschritten:

   - jeder Prozessor MP$_i$ ermittelt seinen tatsächlichen Lastzustand $Y_i$ - bestimmt gegebenenfalls direkt hieraus einen mehrwertigen Laststatus (load state) MPls$_i$ - und schätzt in Abhängigkeit von zuvor mitgeteilten Verteilungsquoten $q_i$(alt) (mit $q_i$=an andere Prozessoren MP$_k$ nach Möglichkeit zu verteilender Lastanteil) und dem typischerweise verteilbaren Anteil V einer typischen Aufgabe seine angebotene Last $A_i$, die zu einem mehrwertigen Lastindikationswert (Balancing Indicator) MPbi$_i$ führt,
   - jeder Prozessor MP$_i$ teilt seinen Lastindikationswert MPbi$_i$ den jeweils anderen Prozessoren MP$_k$ (mit k=1,2,... i-1,i+1,...n) mittelbar oder unmittelbar mit,

- jeder Prozessor $MP_i$ bestimmt seine Lastverteilungswahrscheinlichkeiten $p_{ij}$ (mit j=1,2 n) in Abhängigkeit von den Lastindikationswerten $MPbi_k$ dieser anderen Prozessoren $MP_k$,
- jeder Prozessor $MP_i$ bestimmt seine Verteilungsquote $q_i$(neu) in Abhängigkeit von seinem tatsächlichen Last-zustand $Y_i$ und den Lastverteilungsfaktoren $p_{ij}$
- jeder Prozessor $MP_i$ verteilt anhand seiner Quote $q_i$ und seiner Lastverteilungsfaktoren $p_{ij}$ seine verteilbare Last an andere Prozessoren $MP_k$ wenn seine Verteilquote $q_i$(neu) einen vorgegebenen Wert $q_v$ überschreitet.

2. Verfahren gemäß dem voranstehenden Anspruch 1, dadurch gekennzeichnet, daß die geschätzte angebotene Last $A_i$ eines Prozessors $MP_i$ nach der Formel $A_i:=Y_i/(1-q_iV)$ errechnet wird.

3. Verfahren gemäß einem der voranstehenden Ansprüche, dadurch gekennzeichnet, daß der mehrwertige Lastin-dikationswert (balancing indicator) $MPbi_i$ drei diskrete Werte, vorzugsweise NORMAL (=0 bis 0,7), HIGH (=0,7 bis 0,85) und OVERLOAD (=0,85 bis 1) annehmen kann.

4. Verfahren gemäß dem voranstehenden Anspruch 3, dadurch gekennzeichnet, daß der Lastindikationswert (ba-lancing indicator) $MPbi_i$ bezüglich Änderungen einer Hysterese unterliegt.

5. Verfahren gemäß einem der voranstehenden Ansprüche, dadurch gekennzeichnet, daß der mehrwertige Laststa-tus (load state) $MPls_i$ vier diskrete Werte, vorzugsweise NORMAL (=0 bis 0,7), HIGH (=0,7 bis 0,85), OVERLOAD (=0,85 bis 1) und EXTREME (wenn Laststatus über mehrere CI OVERLOAD) annehmen kann.

6. Verfahren gemäß dem voranstehenden Anspruch 3, dadurch gekennzeichnet, daß der Laststatus (load state) $MPls_i$ bezüglich Änderungen einer Hysterese unterliegt.

7. Verfahren gemäß einem der voranstehenden Ansprüche, dadurch gekennzeichnet, daß der Wert der tatsächlichen Last $Y_i$ proportional zur Prozessorlaufzeit ist.

8. Verfahren gemäß einem der voranstehenden Ansprüche, dadurch gekennzeichnet, daß als typischer verteilbarer Anteil V einer typischen Aufgabe CallP der durchschnittliche oder maximale Anteil ist.

9. Verfahren gemäß dem voranstehenden Anspruch 8, dadurch gekennzeichnet, daß der durchschnittliche oder maximale Anteil einer typischen Aufgabe ständig als gleitender Durchschnitt oder gleitender Maximalwert über eine vorgegebene Zeitspanne $t_D$ ermittelt wird.

10. Verfahren gemäß dem voranstehenden Anspruch 9, dadurch gekennzeichnet, daß für die vorgegebene Zeitspanne $t_D$ gilt: $t_D$ » CI.

11. Verfahren gemäß einem der voranstehenden Ansprüche, dadurch gekennzeichnet, daß als typische Aufgabe eine durchschnittliche oder maximale Aufgabe angenommen wird.

12. Verfahren gemäß dem voranstehenden Anspruch 8, dadurch gekennzeichnet, daß die durchschnittliche oder maximale Aufgabe ständig als gleitender Durchschnitt oder gleitender Maximalwert über eine vorgegebene Zeitspanne $t_D$ ermittelt wird.

13. Verfahren gemäß dem voranstehenden Anspruch 12, dadurch gekennzeichnet, daß für die vorgegebene Zeitspanne $t_D$ gilt: $t_D$ » CI.

14. Verfahren gemäß einem der voranstehenden Ansprüche, dadurch gekennzeichnet, daß für den vorgegebenen Wert $q_v$ der Verteilquote $q_i$, ab dem der Prozessor MPi verteilbare Last an andere Prozessoren $MP_k$ verteilt gilt: $0,05<q_v<0,3$, vorzugsweise $0,1<q_v<0,25$, vorzugsweise qv=0,2.

15. Verfahren gemäß einem der voranstehenden Ansprüche, dadurch gekennzeichnet, daß die Berechnung der Ver-teilquote $q_i$ die folgenden Kriterien erfüllt:

- $p_{ii} := 0$
- falls $MPbi_j$ einer mittlere Last entspricht, vorzugsweise $MPbi_j$=NORMAL, gilt: $p_{ij}$(neu) = pij(alt)+$p_{c1}$/n, für j=1,..., n und i≠j
- falls $MPbi_j$ einer hohen Last entspricht, vorzugsweise $MPbi_j$=HIGH gilt: $p_{ij}$(neu) = pij(alt)-$p_{c2}$/n, für j=1,...,n und

$i \neq j$

- falls $MPbi_j$ einer Überlast entspricht, vorzugsweise $MPbi_j$=OVERLOAD, gilt: $p_{ij}$(neu) = 0
- wobei vorzugsweise die $p_{ij\ (j=1,...,n)}$ mit der Summe $p_{sum}$ der $p_{ij}$ auf 1 normiert wird und
- als Initialisierungswert beim Beginn der Verteilungsprozesse alle $p_{ij}$, ausgenommen $p_{ii}$, gleich sind.

**16.** Verfahren gemäß dem voranstehenden Anspruch 15, dadurch gekennzeichnet, daß für die Konstante $p_{c1}$ gilt:

$$0,1 < p_{c1} < 0,5,\ \text{vorzugsweise}\ 0,2 < p_{c1} < 0,3,\ \text{vorzugsweise}\ p_{c1} = 0,25.$$

**17.** Verfahren gemäß einem der voranstehenden Ansprüche 15-16, dadurch gekennzeichnet, daß für die Konstante $p_{c2}$ gilt: $0,1 < p_{c2} < 0,5$, vorzugsweise $0,2 < p_{c2} < 0,3$, vorzugsweise $p_{c2}$=0,25.

**18.** Verfahren gemäß einem der voranstehenden Ansprüche 15-17, dadurch gekennzeichnet, daß der Initialisierungswert der $p_{ij}$ beim Beginn der Verteilungsprozesse gleich $(n-1)^{-1}$ gesetzt wird.

**19.** Verfahren gemäß einem der voranstehenden Ansprüche 15-18, dadurch gekennzeichnet, daß die Berechnung der Lastindikationswerte $MPbi_i$ die folgenden Kriterien erfüllt:

- falls $MPls_i$ der höchsten Last entspricht, vorzugsweise $MPls_i$=EXTREME, gilt: $q_i$(neu)=$q_{c1}$,
- falls $p_{sum} \geq 1$ gilt:

  - falls der tatsächliche Lastzustand $Y_i$ größer als ein vorgegebener Wert $threshold_H$ ist, wird $q_i$ vergrößert mit $q_i$=min\{$q_i$+$c_{q1}$,1\},
  - falls der tatsächliche Lastzustand $Y_i$ kleiner als ein vorgegebener Wert $threshold_N$ ist, wird $q_i$ verkleinert mit $q_i$=max\{$q_i$-$c_{q2}$, $c_{q3}$\}, mit $0 < c_{q3} < q_v$, vorzugsweise $c_{q3}$=0,1,
  - andernfalls ($threshold_N \leq Y_i \leq threshold_H$) erhält qi einen Zwischenwert zwischen den beiden oben genannten Alternativen, vorzugsweise durch lineare Interpolation

- falls $p_{sum} \leq 1$ gilt: qi(neu)=qi(alt) * $p_{sum}$.

**20.** Verfahren gemäß dem voranstehenden Anspruch 19, dadurch gekennzeichnet, daß für die Konstante $c_{q1}$ gilt:

$$0,05 < c_{q1} < 0,3,\ \text{vorzugsweise}\ 0,1 < c_{q1} < 0,2,\ \text{vorzugsweise}\ c_{q1} = 0,15.$$

**21.** Verfahren gemäß einem der voranstehenden Ansprüche 19-20, dadurch gekennzeichnet, daß für die Konstante $c_{q2}$ gilt: $0,05 < c_{q2} < 0,2$, vorzugsweise $c_{q2}$=0,10.

**22.** Verfahren gemäß einem der voranstehenden Ansprüche 19-21, dadurch gekennzeichnet, daß für die Konstante $threshold_N$ gilt: $0,6 < threshold_N < 0,8$, vorzugsweise $threshold_N$ =0,7.

**23.** Verfahren gemäß einem der voranstehenden Ansprüche 19-22, dadurch gekennzeichnet, daß für die Konstante $threshold_H$ gilt: $0,7 < threshold_H < 0,95$, vorzugsweise $threshold_H$ =0,85

**24.** Verfahren gemäß einem der voranstehenden Ansprüche, dadurch gekennzeichnet, daß zusätzlich ein Überlastwert $OL_i$ der Prozessoren $MP_i$ ermittelt wird, der ein Maß für die Größe der Überlast ist, mit $OL_i$=0,1,...m und die Verteilquote $q_i$ auf jeden Fall vergrößert wird, falls $OL_i$>0 mit $q_i$(neu):=min\{qi(alt)+$c_{q1}$, 1\}.

**25.** Multiprozessorsystem, insbesondere eines Kommunikationssystems, mit mehreren Prozessoren $MP_i$ (mit i=1,2,....,n) zur Ausführung anfallender Aufgaben unter Realzeitbedingungen, wobei:

- jeder Prozessor $MP_i$ Mittel aufweist, um seinen tatsächlichen Lastzustand $Y_i$ zu bestimmen, - gegebenenfalls direkt hieraus einen mehrwertigen Laststatus (load state) $MPls_i$ zu bestimmen - und in Abhängigkeit von zuvor mitgeteilten Verteilungsquoten $q_i$(alt) (mit $q_i$=an andere Prozessoren $MP_k$ nach Möglichkeit zu verteilender Lastanteil) und dem typischerweise verteilbaren Anteil V einer typischen Aufgabe, seine angebotene Last $A_i$ zu schätzen, die zu einem mehrwertigen Lastindikationswert (Balancing Indicator) $MPbi_i$ führt,
- jeder Prozessor $MP_i$ Mittel aufweist, um seinen Lastindikationswert $MPbi_i$ den jeweils anderen Prozessoren

$MP_k$ (mit k=1,2,...i-1,i+1,...n) mittelbar oder unmittelbar mitzuteilen,

- jeder Prozessor $MP_i$ Mittel aufweist, um seine Lastverteilungswahrscheinlichkeiten $p_{ij}$ (mit j=1,2,....n) in Abhängigkeit von den Lastindikationswerten $MPbi_k$ dieser anderen Prozessoren $MP_k$ zu bestimmen,
- jeder Prozessor $MP_i$ Mittel aufweist, um seine Verteilquote $q_i$(neu) in Abhängigkeit von seinem tatsächlichen Lastzustand $Y_i$ zu bestimmen, und
- jeder Prozessor $MP_i$ Mittel aufweist, um anhand seiner Quote $q_i$ und seiner Lastverteilungsfaktoren $p_{ij}$ seine verteilbare Last an andere Prozessoren $MP_k$ zu verteilen, wenn seine Verteilquote $q_i$(neu) einen vorgegebenen Wert $q_v$ überschreitet.

26. Multiprozessorsystem gemäß Anspruch 25, dadurch gekennzeichnet, daß eines der Verfahren gemäß einem der Ansprüche 1-24 implementiert ist.

# Fig. 1

Lastangebot

$A_1$

$a\,q_1$

$Y_1$

$a\,q_1\,p_{12}$

$a\,q_1\,p_{13}$

$a\,q_1\,p_{14}$

| MP$_1$ | MP$_2$ | MP$_3$ | MP$_4$ |
|---|---|---|---|
| $Y_1$ | $Y_2$ | $Y_3$ | $Y_4$ |
| $A_1$ | $A_2$ | $A_3$ | $A_4$ |
| $q_1$ | $q_2$ | $q_3$ | $q_4$ |

EP 1 022 658 A1

# Fig. 2

$p_{ij}$:

MPbi$_i$

NORMAL          HIGH          OVERLOAD

$p_{ij}$ erhöhen          $p_{ij}$ verringern          setze $p_{ij} = 0$

$q_i$:

$$\sum_{J=1}^{GMP} P_{ij}$$

<1

&1

$q_i$ verringern

$Y_i$

$Y_i <$ threshold$_N$          $Y_i >$ threshold$_H$

$q_i$ verringern          $q_i$ (neu) $\approx q_i$ (alt)          $q_i$ vergrößern

# Fig. 3

$$q_i \longrightarrow \min\left\{\max\left\{q_i + \frac{0.25}{threshold_H - threshold_N}(Y_i - threshold_N) - 0.10\right\}, 1.0\right\}$$

# EP 1 022 658 A1

Europäisches Patentamt

**Nummer der Anmeldung**

EP 99 10 1122

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EVANS D J ET AL: "DYNAMIC LOAD BALANCING USING TASK-TRANSFER PROBABILITIES" PARALLEL COMPUTING, Bd. 19, Nr. 8, 1. August 1993, Seiten 897-916, XP000385007 * Seite 900, Absatz 3.1 - Seite 902 * * Seite 902, Absatz 3.2 - Seite 903 * --- | 1,25 | G06F9/46 |
| A | EP 0 715 257 A (BULL SA) 5. Juni 1996 * das ganze Dokument * ----- | 1,25 | |

**RECHERCHIERTE SACHGEBIETE (Int.Cl.6)**

G06F

Der vorliegende Recherchenbericht wurde für alle Patentansprüche erstellt

| Recherchenort | Abschlußdatum der Recherche | Prüfer |
|---|---|---|
| DEN HAAG | 15. Juni 1999 | Michel, T |

**ANHANG ZUM EUROPÄISCHEN RECHERCHENBERICHT
ÜBER DIE EUROPÄISCHE PATENTANMELDUNG NR.**

EP 99 10 1122

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-1999

| Im Recherchenbericht angeführtes Patentdokument | Datum der Veröffentlichung | Mitglied(er) der Patentfamilie | Datum der Veröffentlichung |
|---|---|---|---|
| EP 0715257 A | 05-06-1996 | FR 2727540 A<br>WO 9617297 A<br>JP 10507024 T | 31-05-1996<br>06-06-1996<br>07-07-1998 |

EPO FORM P0461

Für nähere Einzelheiten zu diesem Anhang : siehe Amtsblatt des Europäischen Patentamts, Nr.12/82